## Europäisches Patentamt

## European Patent Office

## Office européen des brevets

(11) Veröffentlichungsnummer: **0 172 941 B1**

(12) **EUROPÄISCHE PATENTSCHRIFT**

(45) Veröffentlichungstag der Patentschrift:
**22.04.87**

(51) Int. Cl.⁴: **B 65 G 49/08**

(21) Anmeldenummer: **84115097.2**

(22) Anmeldetag: **10.12.84**

(54) Vorrichtung zum Entstapeln und Stapeln von Kapseln mit gebranntem bzw. ungebranntem keramischen Gut.

(30) Priorität: **29.08.84 DE 3431745**

(43) Veröffentlichungstag der Anmeldung:
**05.03.86 Patentblatt 86/10**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**EP - A - 0 119 522**

(73) Patentinhaber: **Heinrich Zeidler, Machinenfabrik GmbH & Co.KG, D-8672 Selb/Bayern (DE)**

(72) Erfinder: **Volkmann, Dieter, Häusellohweg 38, D-8672 Selb (DE)**
Erfinder: **Maget, Heinz, Unlitzstrasse 5, D-8673 Rehau (DE)**
Erfinder: **Manzke, Eckhard, Wiesenstrasse 9, D-8671 Höchstädt (DE)**

(74) Vertreter: **Wuesthoff, Franz, Dr.-Ing. et al, Patentanwälte Wuesthoff -v. Pechmann-Behrens-Goetz Schweigerstrasse 2, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zum

- Umsetzen von Kapseln, in denen keramisches Gut gebrannt worden ist, von einem Kapselstapel an einer Entstapelstation zu einer Anfangsstation eines Kapselförderers,
- Umsetzen des gebrannten Guts von den Kapseln zu einer Abführstation,
- Umsetzen ungebrannten Guts von einer Zuführstation auf leere Kapseln und
- Umsetzen der neubesetzten Kapseln von einer Endstation des Kapselförderers zu einem Kapselstapel an einer Stapelstation,
- wobei zum Umsetzen der Kapseln drehbare Greifer und zum Umsetzen des Guts Halteglieder vorgesehen sind.

Solche Vorrichtungen werden in der keramischen Industrie vor allem im Zusammenhang mit dem Brennen glasierter Formlinge wie z.B. Teller verwendet.

Bei einer aus einer älteren, also nachveröffentlichten europäischen Anmeldung EP-A-0 119 522 bekannten Vorrichtung der genannten Gattung ist der Kapselförderer ein Förderband, das sich zwischen einer ersten und einer zweiten Fördervorrichtung erstreckt. Die erste Fördervorrichtung hat mindestens einen Greiferkopf zum Fördern von zu brennendem Gut von der Zuführstation zum Förderband, zum Einsetzen des Guts in eine auf dem Förderband herantransportierte entleerte Kapsel und zum Weiterfördern der gefüllten Kapsel zum Kapselstapel mit zu brennendem Gut. Die zweite Fördervorrichtung hat mindestens einen Greiferkopf zur Entnahme jeweils einer Kapsel mit gebranntem Gut vom Kapselstapel, zum Absetzen der Kapsel auf dem Förderband und zum Weiterfördern des gebrannten Guts zur Abführstation. Die beiden Fördervorrichtungen haben je eine senkrechte Achse, um die der zugehörige mindestens eine Greiferkopf im Kreis herumbewegbar ist. Vorzugsweise gehören zu jeder der beiden Fördervorrichtungen vier Greiferköpfe, die in gleichen Winkelabständen rings um die zugehörige Achse angeordnet sind. Jeder Greiferkopf besteht aus einem Greifer mit mindestens drei Greifgliedern, die an die Mantelfläche einer Kapsel anlegbar sind, und einem Halteglied, das in bezug auf die Greifglieder zentrisch angeordnet, auf und ab verschiebbar und an das keramische Gut in der Kapsel anlegbar ist.

Der Erfindung liegt die Aufgabe zugrunde, eine Vorrichtung zum Entstapeln und Stapeln von mit gebranntem Gut bzw. mit zu brennendem Gut gefüllten Kapseln einfacher und raumsparender zu gestalten als die im Vorstehenden beschriebene Vorrichtung.

Die Aufgabe ist bei einer Vorrichtung der eingangs beschriebenen Gattung erfindungsgemäss dadurch gelöst, dass mindestens die Entstapelstation, die Anfangsstation und die Endstation des Kapselförderers sowie die Stapelstation rings um eine gemeinsame Drehachse angeordnet sind, um die sämtliche Greifer drehbar sind.

Gemäss der Erfindung wird somit das bekannte Prinzip aufgegeben, wonach zum Stapeln und Entstapeln der mit zu brennendem bzw. gebranntem Gut gefüllten Kapseln zwei getrennte Fördervorrichtungen mit je einem oder mehreren Greifern verwendet worden sind. Erfindungsgemäss sorgt eine einzige Fördervorrichtung mit um eine gemeinsame Drehachse drehbaren greifern für sämtliche Bewegungen der Kapseln zwischen der Entstapelstation und der Anfangsstation des Kapselförderers sowie zwischen dessen Endstation und der Stapelstation. Dementsprechend muss für die Bewegungen sämtlicher Greifer nur ein einziger Raum von kreisförmigem Grundriss und auch nur ein einziger Antrieb vorgesehen werden.

Bei einer ersten Ausführungsform der Erfindung sind sämtliche sechs eingangs genannten Stationen rings um die gemeinsame Drehachse angeordnet. Dabei sind die sechs genannten Stationen und sechs um die gemeinsame Drehachse drehbare Greifer vorzugsweise in gleichen Winkelabständen angeordnet.

Übereinstimmend mit dem eingangs beschriebenen Stand der Technik können die Halteglieder in bezug auf die Greifer zentrisch heb- und senkbar sein. In diesem Fall ist es besonders vorteilhaft, wenn gemäss einer zweiten Ausführungsform der Erfindung die Entstapelstation, die Anfangsstation und Endstation des Kapselförderers sowie die Stapelstation zumindest annähernd in einer gemeinsamen waagerechten Ebene in gleichen Winkelabständen angeordnet sind, und die Halteglieder durch die Greifer hindurch zwischen dieser Ebene und einer höherliegenden Ebene bewegbar sind, in welcher das Gut unabhängig von der Kapsel, der es entnommen worden ist bzw. in die es eingesetzt werden soll, weiter- bzw. heranbewegbar ist.

Diese zweite Ausführungsform der Erfindung kann dadurch weitergebildet sein, dass die Abführstation für gebranntes Gut senkrecht über der Anfangsstation, und die Zuführstation für ungebranntes Gut senkrecht über der Endstation des Kapselförderers angeordnet ist.

Bei der zweiten Ausführungsform der Erfindung ist es ferner zweckmässig, dass die Greifer rings um je eine Aussparung an einer heb- und senkbaren unteren Tischplatte angeordnet sind und die Halteglieder oberhalb der Tischplatte aufgehängt und zum Hindurchbewegen des Guts durch die Aussparungen ausgebildet sind.

Der Kapselförderer kann sich, von der gemeinsamen Drehachse der Greifer aus gesehen, aussen um die Abführstation und die Zuführstation herumerstrecken. Dabei kann der Kapselförderer einen von der Abführstation ausgehenden Abführförderer für gebranntes Gut und einen an der Zuführstation endenden Zuführförderer für ungebranntes Gut in senkrechtem Abstand kreuzen.

Bei einer Variante der Erfindung erstreckt sich der Kapselförderer diametral zur gemeinsamen Drehachse der Greifer zwischen Entstapel- sowie Stapelstation einerseits und Abführ- sowie Zuführstation andererseits hindurch.

Bei einer weiteren Variante der Erfindung ist der Kapselförderer ein Drehtisch.

Ausführungsbeispiele der Erfindung werden im folgenden mit weiteren Einzelheiten anhand schematischer Zeichnungen erläutert. Es zeigen:

Fig. 1 eine erste Ausführungsform einer erfindungsgemässen Vorrichtung im Grundriss,

Fig. 2 eine zweite Ausführungsform, ebenfalls im Grundriss,

Fig. 3 eine Variante von Fig. 2,

Fig. 4 eine weitere Variante von Fig. 2,

Fig. 5 den senkrechten Schnitt V-V von Fig. 2 in grösserem Massstab,

Fig. 6 den waagerechten Schnitt VI-VI in Fig. 5,

Fig. 7 den senkrechten Schnitt VII-VII von Fig. 3 in grösserem Massstab.

Alle in den Zeichnungen dargestellten Vorrichtungen haben die Aufgabe, Kapseln 10, die gebranntes Gut 12 enthalten und zu Kapselstapeln 14 zusammengefasst sind, zu vereinzeln, das gebrannte Gut 12 zu entnehmen, die Kapseln 10 mit ungebranntem Gut 16 zu besetzen und sie wieder zu Kapselstapeln 18 zusammenzufassen. Durch das Stapeln wird die Raumhöhe eines Brennofens gut ausgenutzt und das Gut beim Brennen geschützt, beispielsweise gegen herunterfallende Teilchen einer Ausmauerung des Ofens.

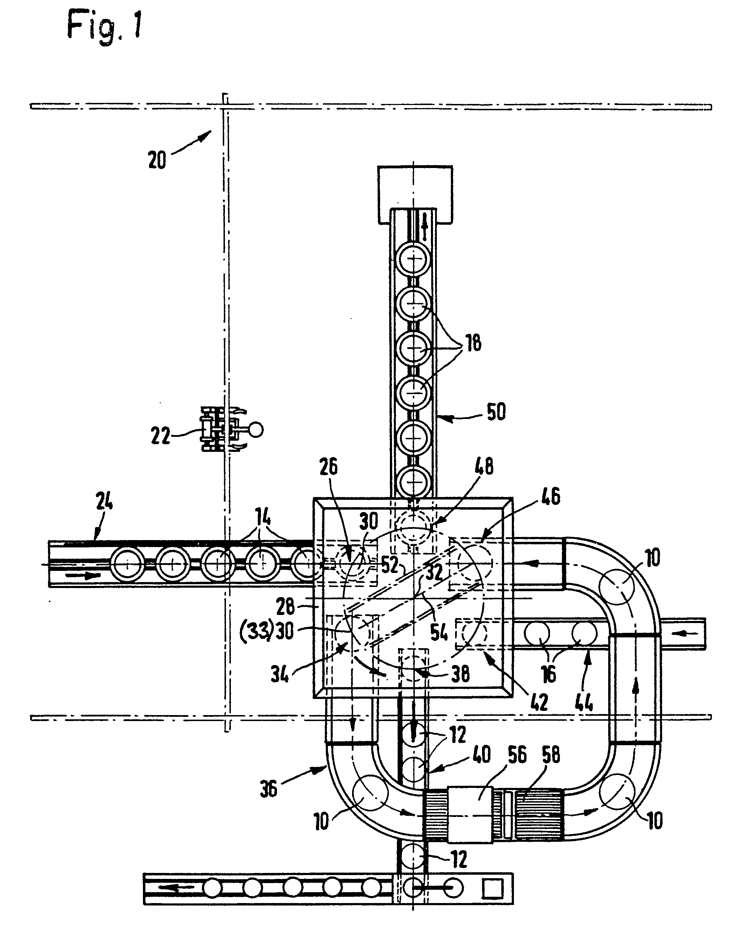

Die in Fig. 1 dargestellte erfindungsgemässe Vorrichtung ist im Arbeitsbereich einer Hängekrananlage 20 angeordnet, welche die Kapselstapel 14 von nicht dargestellten Wagen, die den Ofen durchlaufen haben, zu der Vorrichtung transportiert und die Kapselstapel 18 von der Vorrichtung zu Wagen transportiert, die den Ofen durchlaufen werden. Die Hängekrananlage 20 hat eine als Laufkatze ausgebildete Greif- und Hubvorrichtung 22, welche die Kapselstapel 14 auf einem Kapselstapelband 24 absetzt. Dieses endet in einer Entstapelstation 26 innerhalb eines in Draufsicht quadratischen Gehäuses 28. Zur Entstapelstation 26 gehört eine Hebebühne üblicher Bauart, die dafür sorgt, dass die oberste Kapsel 10 des in der Entstapelstation stehenden Kapselstapels 14 eine bestimmte, stets gleichbleibende Höhe einnimmt.

Innerhalb des Gehäuses 28 sind sechs Greifer 30 gemeinsam schrittweise um jeweils 60° um eine zentrale, senkrechte Drehachse 32 drehbar. Jedem der Greifer 30, die nur angedeutet sind, ist ein zentrisch heb- und senkbares Halteglied 33 zugeordnet und beide zusammen sind in bekannter Weise so ausgebildet, dass sie entweder eine Kapsel 10 oder ein Stück gebranntes oder ungebranntes Gut 12 bzw. 16 alleine oder Kapsel und Gut gleichzeitig aufnehmen, festhalten und absetzen können.

In Drehrichtung der Greifer 30 und Halteglieder 33, die mit einem Pfeil angedeutet ist, folgt auf die Entstapelstation 26 in einem Abstand von 60° eine Anfangsstation 34 eines Kapselförderers 36, dessen Förderstrecke in Draufsicht ungefähr C-förmig ist. Im Abstand von weiteren 60° folgt eine Abführstation 38, an der ein Abführförderer 40 für gebranntes Gut 12 beginnt. Weitere 60° dahinter ist eine Zuführstation 42 angeordnet, an der ein Zuführförderer 44 für ungebranntes Gut 16 endet. Dahinter ist, wiederum im Abstand von 60°, eine Endstation 46 angeordnet, an welcher der Kapselförderer 36 endet. Schliesslich ist zwischen der Endstation 46 und der Entstapelstation 26, im Abstand von je 60° von beiden, eine Stapelstation 48 angeordnet, an der ein Kapselstapelband 50 beginnt.

Sämtliche genannten Stationen sind in gleicher Höhenlage angeordnet; die Greifer 30 und Halteglieder 33 sind gemeinsam aus einer höherliegenden Transportebene in die genannte Höhenlage absenkbar und wieder in die Transportebene anhebbar. Die Drehung der Greifer 30 und Halteglieder 33 um die Drehachse 32 findet taktweise statt.

In jeder Stillstandsphase steht einer der Greifer 30 mit zugehörigem Halteglied 33 senkrecht über der Entstapelstation 26, so dass beim Absenken die oberste Kapsel 10 vom Greifer und das in ihr enthaltene gebrannte Gut 12 vom Halteglied erfasst wird und bei der nächsten Bewegung beide zusammen mitgenommen werden. Dieser Greifer 30 setzt nach einer Drehung um 60° die Kapsel 10 in der Anfangsstation 34 auf dem Kapselförderer 36 ab; das zugehörige Halteglied 33 hält aber das gebrannte Gut 12 noch fest und setzt dieses erst nach einer weiteren Drehung um 60° in der Abführstation 38 am Anfang des Abführförderers 40 ab. Von dort aus gelangen Greifer 30 und Halteglied 33 bei der nächsten Drehung um wiederum 60° leer in die Zuführstation 42, wo das Halteglied 33 ein vom Zuführförderer 44 herangeschafftes Stück ungebranntes Gut 16 erfasst, das nach der nächsten Drehung um wiederum 60° in der Endstation 46 des Kapselförderers 36 in einer von diesem herangeschafften leeren Kapsel 10 abgesetzt wird, wobei der Greifer 30 zugleich diese Kapsel erfasst, um sie bei der nächsten Drehung um 60° gemeinsam mit dem ungebrannten Gut 16 zur Stapelstation 48 mitzunehmen. Dort wird die Kapsel 10 samt dem in ihr enthaltenen ungebrannten Gut 16 auf der Hebebühne am Anfang des Kapselstapelbandes 50 abgesetzt.

Jeder der fünf übrigen Greifer 30 mit zugehörigem Halteglied 33 führt, gegenüber dem vorangehenden Greifer um ein Sechstel des vollständigen Arbeitszyklus phasenverschoben, die gleichen Arbeitsgänge aus.

Anstelle des mit vollen Linien gezeichneten Kapselförderers 36, der sich C-förmig aussen um einen Teil des Gehäuses 28 herumerstreckt, kann ein Kapselförderer 52 vorgesehen sein, der sich, wie in Fig. 1 mit strichpunktierten Doppellinien angedeutet, auf kürzestem Weg, also diametral zur Drehachse 32, von der Anfangsstation 34 zur Endstation 46 erstreckt. Statt dessen kann der Kapselförderer 36 auch durch einen Kapselförderer 54 ersetzt sein, der als Doppelarm mit zwei in bezug auf die Drehachse 32 einander diametral gegenüber angeordneten Kapselträgern ausgebildet ist. Dieser Kapselförderer 54 ist längs der Drehachse 32 höhenverstellbar und in einer Höhenstellung, in der er mit keiner der genannten Stationen kollidieren kann, um jeweils 180° um die Drehachse 32 drehbar, wobei er jeweils eine leere Kapsel 10 von der Anfangsstation 34 zur Endstation 46 fördert.

Im allgemeinen ist jedoch bei der in Fig. 1 dargestellten Gesamtanordnung der mit vollen Linien gezeichnete Kapselförderer 36 vorzuziehen, weil er reichlich Platz für die Anordnung einer Absaugevorrichtung 56 oder anderen Vorrichtung zum Reinigen der leeren Kapseln 10 bietet. Ferner kann am Kapselförderer 36 eine Engobiervorrichtung 58 angeordnet sein, von der die Kapseln 10 an ihrer Unterseite mit einer Flüssigkeit benetzt werden, welche die Kapseln daran hindert, aneinanderzuhaften, wenn sie anschliessend wieder zu Stapeln zusammengefasst sind.

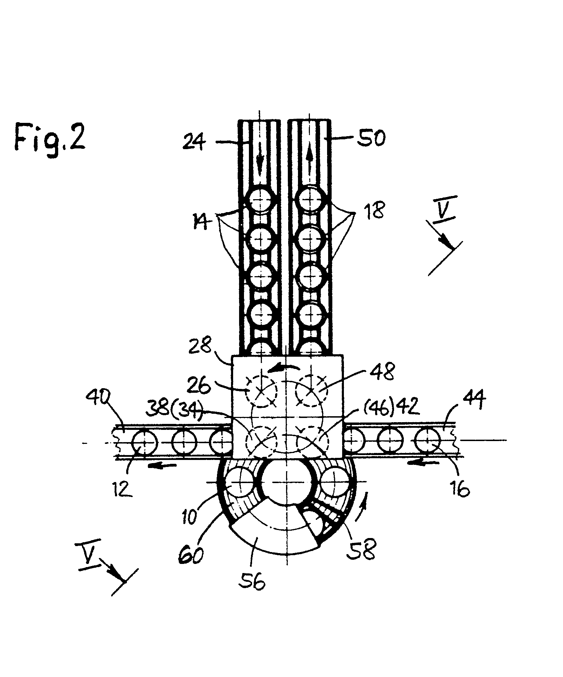

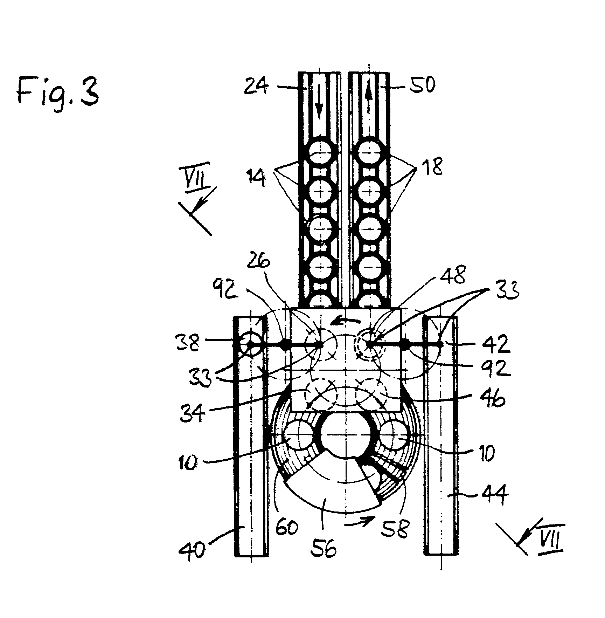

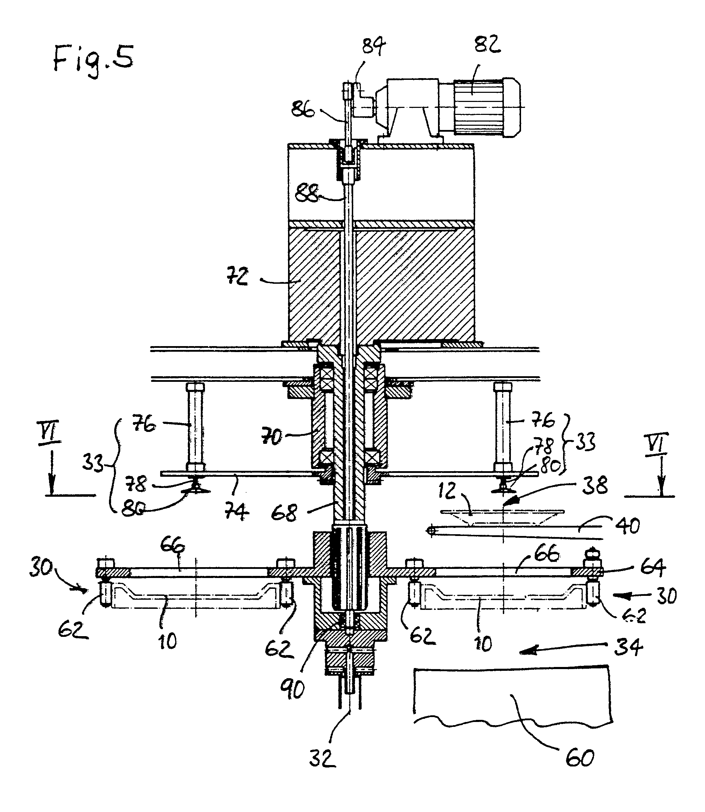

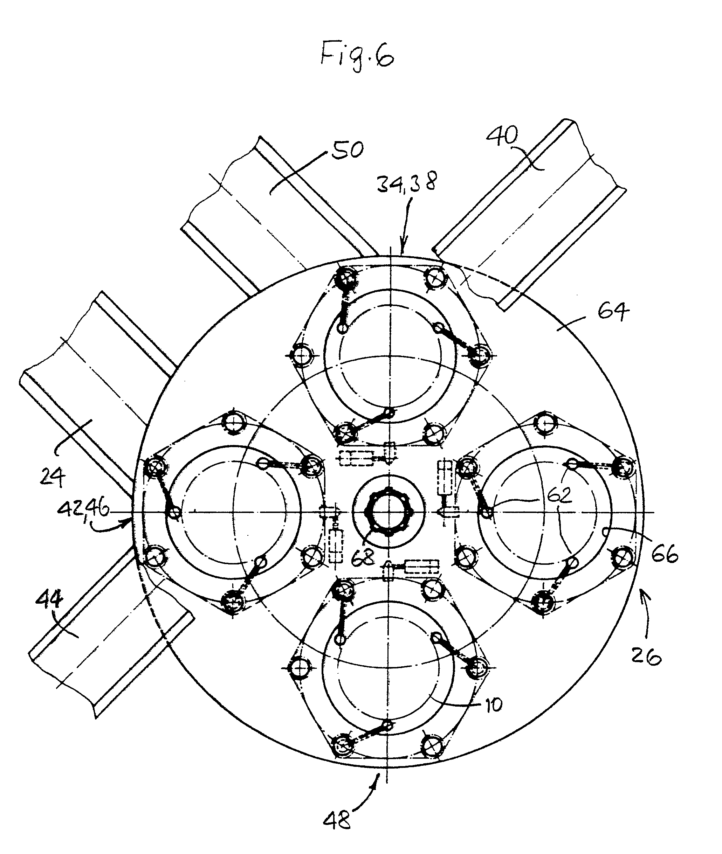

Die in Fig. 2 sowie mit weiteren Einzelheiten in Fig. 5 und 6 dargestellte Ausführungsform der Erfindung und ihre in Fig. 3 und 4 sowie 7 dargestellten Varianten unterscheiden sich von der in Fig. 1 dargestellten Ausführungsform in erster Linie dadurch, dass die Entstapelstation 26, die Anfangsstation 34 und die Endstation 46 sowie die Stapelstation 48 in Winkelabständen von nur 90° rings um die gemeinsame Drehachse 32 der Greifer 30 angeordnet sind und dass ein zur Drehachse 32 achsparalleler Drehtisch als Kapselförderer 60 vorgesehen ist.

Gemäss Fig. 2, 5 und 6 sind die Abführstation 38 für gebranntes Gut 12 sowie die Zuführstation 42 für ungebranntes Gut 16 in gleichen Abständen von der Drehachse 32 angeordnet wie die übrigen Stationen, jedoch in einer höherliegenden Ebene. Die Abführstation 38 ist wie in Fig. 1 vom Anfang eines Abführförderers 40 gebildet, der jedoch, wie besonders aus Fig. 5 ersichtlich, senkrecht über der Anfangsstation 34 des Kapselförderers 60 angeordnet ist. In entsprechender Weise ist die Zuführstation 42 vom Ende eines Zuführförderers 44 gebildet, das gemäss Fig. 2 im Gegensatz zu Fig. 1 senkrecht über der Endstation 46 des Kapselförderers 60 angeordnet ist.

Die Greifer 30 weisen gemäss Fig. 5 und 6 je drei Greifglieder 62 auf, die an einer unteren Tischplatte 64 rings um eine kreisförmige Aussparung 66 gelagert sind. Die Tischplatte 64 weist insgesamt vier solche Aussparungen 66 auf, die in Winkelabständen von 90° gegeneinander versetzt und je einem der Greifer 30 zugeordnet sind. Der Durchmesser jeder der Aussparungen 66 ist grösser als der grösste vorkommende Durchmesser des keramischen Guts 12, 16.

Die untere Tischplatte 64 ist auf- und abbeweglich an einer senkrechten Welle 68 geführt, deren geometrische Achse die Drehachse 32 ist. Die Welle 68 ist in einem ortsfesten Lager 70 gelagert, über ein nur angedeutetes Maltesergetriebe 72 drehantreibbar und trägt eine mit ihr fest verbundene obere Tischplatte 74, an der senkrecht über der Mitte jeder Aussparung 66 und somit auch zentrisch in bezug auf je einen Greifer 30 eine pneumatische Kolben-Zylindereinheit 76 angeordnet ist. Jede dieser Kolben-Zylindereinheiten 76 hat eine nach unten ausfahrbare hohle Kolbenstange 78, an deren unterem Ende ein Saugnapf 80 befestigt ist; diese Bauteile bilden zusammen das in bezug auf den zugehörigen Greifer 30 zentral heb- und senkbare Halteglied 33 für das Gut 12 bzw. 16.

Oberhalb des Maltesergetriebes 72 ist ein schrittweise arbeitender Elektromotor 82 ortsfest angeordnet, an dessen Welle eine Kurbel 84 befestigt ist. Die Kurbel 84 ist über ein Pleuel 86 gelenkig mit einer Stange 88 verbunden, die sich durch die hohle Welle 68 hindurcherstreckt und über ein Axialdrucklager 90 mit der unteren Tischplatte 64 verbunden ist.

Fig. 5 zeigt die untere Tischplatte 64 in ihrer oberen Endstellung, in der sie von einem weiteren, nicht dargestellten Elektromotor über das Maltesergetriebe 72 schrittweise um jeweils 90° um die Drehachse 32 drehbar ist. Nach jeder Drehung steht einer der Greifer 30 und das zugehörige Halteglied 33 senkrecht über der Entstapelstation 26, in der eine Kapsel 10 mit gebranntem Gut 12, beispielsweise einem Teller, zum Abheben bereitsteht. Nun wird die untere Tischplatte 64 abgesenkt und anschliessend der in der Entstapelstation 26 stehende Greifer 30 geschlossen, so dass dessen Greifglieder 62 die bereitstehende Kapsel 10 erfasst. Gleichzeitig, oder auch schon kurz zuvor, wird das zugehörige Halteglied 33 abgesenkt, so dass dessen Saugnapf 80 das auf der Kapsel 10 stehende gebrannte Gut 12 erfasst und dieses bei der anschliessenden Rückbewegung des Halteglieds 33 in seine obere Endstellung mitnimmt. Unmittelbar darauf wird auch die untere Tischplatte 64 in ihre obere Endstellung zurückbewegt, so dass sie die Kapsel 10 vom Kapselstapel 14 abhebt.

Anschliessend werden die beiden Tischplatten 64 und 74 gemeinsam um 90° gedreht und die untere Tischplatte 64 wird wieder abgesenkt. Dadurch gelangt die Kapsel 10 in die Anfangsstation 34 des Kapselförderers. Gleichzeitig gelangt das gebrannte Gut 12 durch Absenken des Halteglieds 33 in die Abführstation 38, von wo aus der Abführförderer 40 das Gut 12 weiterfördert, beispielsweise zu einer Verpackungsstation.

Am Ende der nächsten Drehung der beiden Tischplatten 64 und 74 um 90° gelangt der beschriebene Greifer 30 in die Endstation 46 des Kapselförderers 36, während das zugehörige Halteglied 33 in die senkrecht darüber angeordnete Zuführstation 42 am Ende des Zuführförderers 44 gelangt. Der Greifer 30 hebt nun vom Kapselförder 36 eine leere Kapsel 10 ab, die auf dem Weg zwischen dessen Anfangsstation 34 und Endstation 46 gereinigt und engobiert worden ist. Gleichzeitig hebt das Halteglied 33 ein Stück glasiertes, noch ungebranntes Gut 16 vom Zuführförderer 44 ab.

Die nächste Drehung der beiden Tischplatten 64 und 74 um weitere 90° bringt den genannten Greifer 30 in die Stapelstation 48, wo er die noch leere Kapsel 10 auf dem Kapselstapel 18 absetzt. Gleichzeitig oder unmittelbar danach setzt das zugehörige Halteglied 33 das ungebrannte Gut 16 in dieser Kapsel 10 ab. Bis dahin sind Kapsel 10 und Gut 16 also getrennt voneinander transportiert worden, wodurch jegliche Gefahr vermieden worden ist, dass das Gut 16 innerhalb der Kapsel 10 verrutscht oder durch Kräfte, die es in der Kapsel festhalten, beschädigt wird.

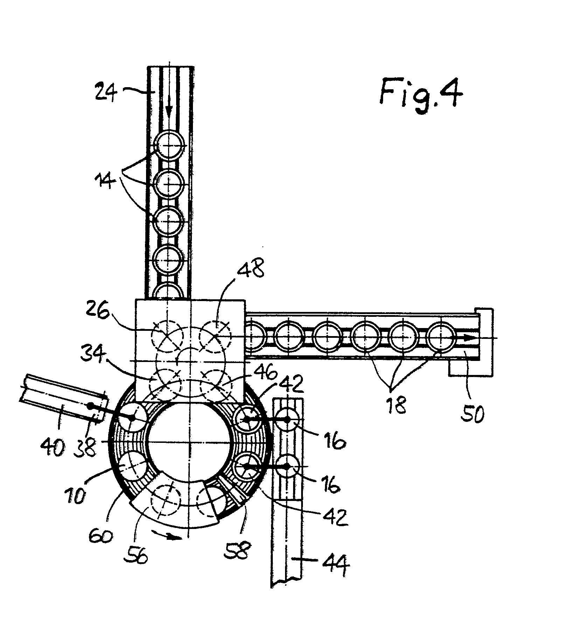

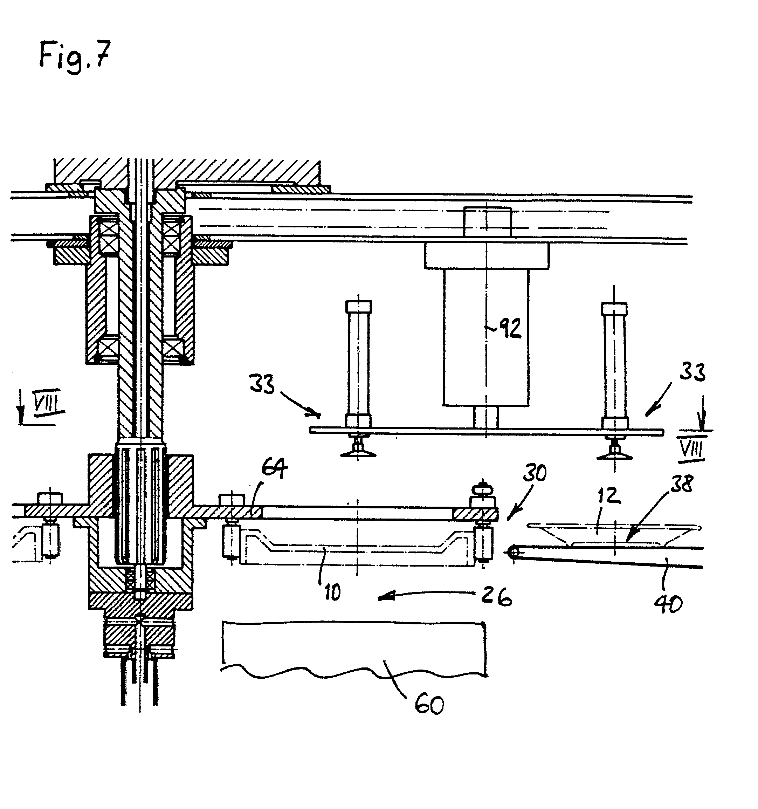

Die in Fig. 5 und 6 dargestellte ständige Zuordnung eines bestimmten Halteglieds 33 zu jedem Greifer 30 ist nicht unbedingt erforderlich, wie Fig. 3 und 7 zeigen. Dort ist senkrecht über der Entstapelstation 26 ein Halteglied 33 angeordnet, das um eine zur Drehachse 32 mit Abstand parallele, also ebenfalls senkrechte, ortsfeste Achse 92 schrittweise um jeweils 180° drehbar ist. Um dieselbe Achse 92 ist ein dem genannten Halteglied 33 diametral gegenüber angeordnetes, im übrigen gleiches, Halteglied 33 drehbar. Diese beiden Halteglieder 33 heben abwechselnd ein Stück gebranntes Gut 12 von der jeweils obersten auf dem Kapselstapel 14 stehenden Kapsel 10 ab und setzen das Gut 12 an der Abführstation 38 ab, die in diesem Fall radial ausserhalb der Tischplatte 64 angeordnet ist. In entsprechender Weise, nur in umgekehrter Richtung, wird ungebranntes Gut 16 von der ebenfalls radial ausserhalb der Tischplatte 64 angeordneten Zuführstation 42 zur Stapelstation 48 gebracht und dort in einer leeren Kapsel 10 abgesetzt. Der Kapseltransport findet gemäss Fig. 3 und 7 in gleicher Weise statt wie anhand der Fig. 2, 5 und 6 beschrieben. Abführstation 38 und Zuführstation 42 sind jedoch gemäss Fig. 3 und 7 ausserhalb des Arbeitsbereichs der Greifer 30 angeordnet. Gleiches gilt für die in Fig. 4 dargestellte Variante, die sich jedoch von Fig. 3 dadurch unterscheidet, dass die Abführstation 38 und die Zuführstation 42 dem Kapselförderer 60 zugeordnet sind. Die Kapseln 10 werden hier zusammen mit dem gebrannten Gut 12 von der Entstapelstation 26 zur Anfangsstation 34 des Kapselförderers 60 umgesetzt und gelangen durch dessen schrittweise stattfindende Drehung in den Arbeitsbereich von Haltegliedern 33, die ständig ausserhalb des Arbeitsbereichs der Greifer 30 angeordnet sind und jeweils ein Stück gebranntes Gut 12 zur Abführstation 38 am Anfang des Abführförderers 40 umsetzen. In entsprechender Weise wird ungebranntes Gut 16 von einer doppelten Zuführstation 42 am Ende des Zuführförderers 44 in leere Kapseln 10 auf dem Kapselförderer 36 umgesetzt, ehe diese Kapseln wieder in den Arbeitsbereich der Greifer 30 gelangen. Die doppelte Zuführstation 42 hat den Vorteil, dass das ungebrannte und deshalb noch empfindliche Gut 16 langsam und somit schonend umgesetzt werden kann.

**Patentansprüche**

1. Vorrichtung zum
— Umsetzen von Kapseln (10), in denen keramisches Gut (12) gebrannt worden ist, von einem Kapselstapel (14) an einer Entstapelstation (26) zu einer Anfangsstation (34) eines Kapselförderers (36; 52; 54; 60),
— Umsetzen des gebrannten Guts (12) von den Kapseln (10) zu einer Abführstation (38),
— Umsetzen ungebrannten Guts (16) von einer Zuführstation (42) auf leere Kapseln (10) und
— Umsetzen der neubesetzten Kapseln (10) von einer Endstation (46) des Kapselförderers (36; 52; 54; 60) zu einem Kapselstapel (18) an einer Stapelstation (48),
— wobei zum Umsetzen der Kapseln (10) drehbare Greifer (30) und zum Umsetzen des Gutes (12, 16) Halteglieder (33) vorgesehen sind,

dadurch gekennzeichnet,
dass mindestens die Entstapelstation (26), die Anfangsstation (34) und die Endstation (46) des Kapselförderers (36; 52; 54; 60) sowie die Stapelstation (48) rings um eine gemeinsame Drehachse (32) angeordnet sind, um die sämtliche Greifer (30) drehbar sind.

2. Vorrichtung nach Anspruch 1,
dadurch gekennzeichnet,
dass sämtliche sechs genannten Stationen (26, 34, 38, 42, 46, 48) rings um die gemeinsame Drehachse (32) angeordnet sind.

3. Vorrichtung nach Anspruch 2,
dadurch gekennzeichnet,
dass die sechs genannten Stationen (26, 34, 38, 42, 46, 48) und sechs um die gemeinsame Drehachse (32) drehbare Greifer (30) in gleichen Winkelabständen angeordnet sind.

4. Vorrichtung nach Anspruch 1 oder 2, bei der die Halteglieder (33) in bezug auf die Greifer (30) zentrisch heb- und senkbar sind,
dadurch gekennzeichnet,
dass die Entstapelstation (26), die Anfangsstation (34) und Endstation (46) des Kapselförderers (36; 52; 54; 60) sowie die Stapelstation (48) zumindest annähernd in einer gemeinsamen waagerechten Ebene in gleichen Winkelabständen angeordnet sind und die Halteglieder (33) durch die Greifer (30) hindurch zwischen dieser Ebene und einer höherliegenden Ebene bewegbar sind, in welcher das Gut (12, 16) unabhängig von der Kapsel (10), der es entnommen worden ist bzw. in die es eingesetzt werden soll, weiter- bzw. heranbewegbar ist.

5. Vorrichtung nach Anspruch 4,
dadurch gekennzeichnet,
dass die Abführstation (38) für gebranntes Gut (12) senkrecht über der Anfangsstation (34), und die Zuführstation (42) für ungebranntes Gut (16) senkrecht über der Endstation (46) des Kapselförderers (36; 52; 54; 60) angeordnet ist.

6. Vorrichtung nach Anspruch 4 oder 5,
dadurch gekennzeichnet,
dass die Greifer (30) rings um je eine Aussparung (66) an einer heb- und senkbaren unteren Tischplatte (64) angeordnet sind und die Halteglieder (33) oberhalb der Tischplatte (64) aufgehängt und zum Hindurchbewegen des Guts (12, 16) durch die Aussparungen (66) ausgebildet sind.

7. Vorrichtung nach Anspruch 2 oder 3,
dadurch gekennzeichnet,
dass der Kapselförderer (36) sich, von der gemeinsamen Drehachse (32) der Greifer (30) aus gesehen, aussen um die Abführstation (38) und die Zuführstation (42) herumerstreckt.

8. Vorrichtung nach Anspruch 7,
dadurch gekennzeichnet, dass der Kapselförderer (36) einen von der Abführstation (38) ausgehenden Abführförderer (40) für gebranntes Gut (12) und einen an der Zuführstation (42) endenden Zuführförderer (44) für ungebranntes Gut (16) in senkrechtem Abstand kreuzt.

9. Vorrichtung nach Anspruch 2 oder 3,
dadurch gekennzeichnet, dass der Kapselförderer (52) sich diametral zur gemeinsamen Drehachse (32) der Greifer (30) zwischen Entstapel- sowie Stapelstation (26, 48) einerseits und Abführ- sowie Zuführstation (38, 42) andererseits hindurcherstreckt.

10. Vorrichtung nach Anspruch 2 oder 2, dadurch gekennzeichnet, dass der Kapselförderer (60) ein Drehtisch ist.

**Claims**

1. An apparatus for
— transferring capsules (10) in which ceramic material (12) was fired, from a stack (14) of capsules at an unstacking station (26) to a starting station (34) of a capsule conveyor (36; 52; 54; 60),
— transferring the fired material (12) from the capsules (10) to a discharge station (38),
— transferring green material (16) from a feed station (42) to empty capsules (10), and
— transferring the newly filled capsules (10) from a terminal station (46) of the capsule conveyor (36; 52; 54; 60) to a stack (18) of capsules at a stacking station (48),
— wherein rotatable grippers (30) are provided for transferring the capsules (10) and retaining members (33) are provided for transferring the material (12, 16),
characterized in
that at least the unstacking station (26), the starting station (34) and the terminal station (46) of the capsule conveyor (36; 52; 54; 60), as well as the stacking station (48) are arranged around a common rotational axis (32) about which all grippers (30) can be rotated.

2. The apparatus as defined in claim 1, characterized in
that all six stations (26, 34, 38, 42, 46, 48) referred to are arranged around the common rotational axis (32).

3. The apparatus as defined in claim 2, characterized in
that the six stations (26, 34, 38, 42, 46, 48) referred to and six grippers (30) rotatable about the common rotational axis (32) are arranged at equal angular distances.

4. The apparatus as defined in claim 1 or claim 2, in which the retaining members (33) are adapted to be lifted and lowered centrically with respect to the grippers (30),
characterized in
that the unstacking station (26), the starting station (34) and the terminal station (46) of the capsule conveyor (36; 52; 54; 60) as well as the stacking station (48) are arranged at least approximately in a common horizontal plane at equal angular distances, and that the retaining members (33) are adapted to be moved, passing through the grippers (30), between said plane and a plane located at a higher level in which the material (12, 16) is adapted to be moved further away from or toward the capsule (10), independent of the capsule (10) out of which it has been removed or into which it is to be filled.

5. The apparatus as defined in claim 4, characterized in
that the discharge station (38) for fired material (12) is arranged vertically above the starting station (34), and the feed station (42) for green material (16) is arranged vertically above the terminal station (46) of the capsule conveyor (36; 52; 54; 60).

6. The apparatus as defined in claim 4 or claim 5,
characterized in
that the grippers (30) are disposed around one recess (66), each, on a lower tableboard (64) that is adapted to be lifted and lowered, and that the retaining members (33) are suspended above the tableboard (64) and are designed to move the material (12, 16) through the recesses (66).

7. The apparatus as defined in claim 2 or claim 3,
characterized in
that the capsule conveyor (36) extends outside around the discharge station (38) and the feed station (42), as seen from the common rotational axis (32) of the grippers (30).

8. The apparatus as defined in claim 7, characterized in
that the capsule conveyor (36) crosses at a vertical distance a discharging conveyor (40) for fired material (12), which starts at the discharge station (38), and a feeding conveyor (44) for green material (16), which ends at the feed station (42).

9. The apparatus as defined in claim 2 or claim 3,
characterized in
that the capsule conveyor (52) extends diametrically with respect to the common rotational axis (32) of the grippers (30) between unstacking and stacking stations (26, 48), on the one hand, and discharge and feed stations (38, 42), on the other hand.

10. The apparatus as defined in claim 2 or claim 3,
characterized in
that the capsule conveyor (60) is a rotary table.

**Revendications**

1. Dispositif destiné à transporter des capsules (10) contenant du matériau céramique (12) cuit, à partir d'une pile de capsules (14) se trouvant dans un poste de désempilage (26) vers un poste de tête (34) d'un transporteur de capsules (36, 52, 54, 60), à transférer le matériau cuit (12) des capsules (10) vers un poste d'évacuation (38), à placer du matériau cru (16) d'un poste d'alimentation (42) dans les capsules (10) et à déplacer les capsules nouvellement remplies (10) d'un poste terminal (46) du transporteur de capsules (36, 52, 54, 60) vers une pile de capsules (18) dans un poste d'empilage (48), des preneurs (30) mobiles en rotation et des organes de retenue (33) étant prévus pour déplacer respectivement les capsules (10) et le matériau (12), (16), caractérisé en ce qu'au moins le poste de désempilage (26), le poste de tête (34) et le poste terminal (46) du transporteur de capsules (36, 52, 54, 60) ainsi que le poste d'empilage (48) sont disposés autour d'un axe de rotation commun (32) autour duquel tous les preneurs (30) sont mobiles en rotation.

2. Dispositif selon la revendication 1, caractérisé en ce que tous les six postes indiqués (26, 34, 38, 42, 46, 48) sont disposés autour d'un axe de rotation commun (32).

3. Dispositif selon la revendication 2, caractérisé en ce que les six postes mentionnés (26, 34, 38, 42, 46, 48) et les six preneurs (30) mobiles en rotation autour de l'axe de rotation commun (32) sont séparés selon des écarts angulaires identiques.

4. Dispositif selon les revendications 1 ou 2, du type sur lequel les organes de retenue (33) sont relevables et abaissables de manière centrée par rapport aux preneurs (30), caractérisé en ce que le poste de désempilage (26), le poste de tête (34) et le poste terminal (46) du transporteur de capsules (36, 52, 54, 60) ainsi que le poste d'empilage (48) sont disposés avec des écarts angulaires identiques au moins approximativement dans un plan horizontal commun et que les organes de retenue (33) sont déplaçables à travers les preneurs (30) entre ce plan et un plan situé à un niveau supérieur dans lequel le matériau (12, 16) peut être évacué et/ou amené indépendamment de son enlèvement ou de sa mise en place dans la capsule (10).

5. Dispositif selon la revendication 4, caractérisé en ce que le poste d'évacuation (38) pour le matériau cuit (12) et le poste d'alimentation (42) pour le matériau cru (16) sont disposés à la verticale respectivement au-dessus du poste de tête (34) et du poste terminal (46) du transporteur de capsules (36, 52, 54, 60).

6. Dispositif selon les revendications 4 ou 5, caractérisé en ce que les preneurs (30) sont disposés autour d'un évidement (66) ménagé dans une table inférieure (64) relevable et abaissable et que les organes de retenue (33) sont suspendus au-dessus de la table (64) et sont conçus de manière à pouvoir déplacer le matériau (12, 16) à travers des évidements (66).

7. Dispositif selon les revendications 2 ou 3, caractérisé en ce que le transporteur de capsules (36) s'étend à l'extérieur autour du poste d'évacuation (38) et du poste d'alimentation (42), vu à partir de l'axe de rotation commun (32) des preneurs (30).

8. Dispositif selon la revendication 7, caractérisé en ce que le transporteur de capsules (36) croise à une distance verticale un transporteur d'évacuation (40) pour du matériau cuit (12) partant du poste d'évacuation (38) et un transporteur d'alimentation (44) pour du matériau cru (16) se terminant au poste d'alimentation (42).

9. Dispositif selon les revendications 2 ou 3, caractérisé en ce que le transporteur de capsules (52) s'étend de manière diamétralement opposée à l'axe de rotation commun (32) des preneurs (30) entre le poste de désempilage ainsi que le poste d'empilage (26, 48) d'une part et le poste d'évacuation ainsi que le poste d'alimentation (38, 42) d'autre part.

10. Dispositif selon les revendications 2 ou 3, caractérisé en ce que le transporteur de capsules (60) est une table rotative.

# Fig. 1

Fig.2

Fig. 3

Fig.4

0 172 941

15

Fig.5

0 172 941

17

Fig.6

**Fig. 7**